# EUROPEAN PATENT APPLICATION

(11) **EP 1 990 972 A1**
(43) Date of publication of application: **12.11.2008**
(21) Application number: 07720281.0
(22) Date of filing: 28.02.2007
(51) Int. Cl.: H04L 29/06, H04L 12/56

(54) **METHOD FOR TESTING SAFETY ACCESS PROTOCOL CONFORMITY TO IDENTIFICATION SERVICE ENTITY AND SYSTEM THEREOF**

(30) Priority: 28.02.2006 CN 200610041849
(71) Applicant: China Iwncomm Co., Ltd, Shaanxi 710075 (CN)
(72) Inventor: ZHANG, Bianling, Shaanxi 710075 (CN); CAO, Jun, Shaanxi 710075 (CN); TU, Xuefeng, Shaanxi 710075 (CN)
(74) Representative: Herrmann, Uwe
(86) International application number: PCT/CN2007/000637
(87) International publication number: WO 2007/098694

(57) **Abstract**

Method for testing safety access protocol conformity to identification service entity is disclosed. The method comprises following steps: checking whether certificates issued by identification service entity to be tested are conformed to specification or not; sending certificate identification request message to said entity by simulating identification applicant; capturing certificate identification response sent by said entity; gaining safety access protocol conformity test result by analyzing said certificate identification response. Further, the apparatus for testing safety access protocol conformity to identify service entity is also disclosed.

## Description

This application claims the benefit of Chinese Patent Application No. 200610041849.9, titled "Method and system for secure access protocol conformance testing on authentication server" and filed with the Chinese Patent Office on February 28, 2006, which is hereby incorporated by reference in its entirety.

### Field of the Invention

The present invention relates to the field of secure network access protocol testing and in particular to a method and an apparatus for secure access protocol conformance testing on an authentication service entity.

### Background of the Invention

Internet Protocol (IP) based networks support an increasing number of types of services and have been involved in various aspects of national economy and society. Wireless IP based networks transmit data through radio waves, which brings physical openness of the networks to a new level. Therefore, secure access is becoming a key issue in secure operation of wired and wireless networks.

A secure access system of an IP network mainly involves three network entities: a network terminal, an access point (AP) and an authentication service entity. The network terminal requests to access the network and enjoys various resources that the network provides; the access point is an edge device of the IP network and an entity providing access service for the network terminal; and the authentication service entity is an entity providing user identity authentication service.

Currently, secure access protocol conformance testing systems for products in the field of wireless local area network mainly include interoperability testing systems, and assisting management testing systems which are applied in some wireless local area networks. Particularly, an assisting management testing system provides information relating to network system installation and application by monitoring statuses of a physical channel and the network. An interoperability testing system verifies the correctness of the realization of a protocol on a device to be tested by testing the interconnectability between the device to be tested and a reference device and performance of intercommunication, i.e., a protocol conformance test.

The above-mentioned existing interoperability testing system performs conformance tests in a typical application environment, and the essential of which is, to deduce the correctness of the realization of a lower layer protocol by verifying the interconnectability of a upper layer protocol between a reference device and a device to be tested. Hence, such testing is incomplete and may lead to a testing result in error. Furthermore, a testing result is determined based on the interconnectability and performance of intercommunication between a reference device and a device to be tested, so that the correctness of the implementation of the reference device will affect the accuracy of the testing result; and it'll be difficult for a tester to obtain error locating information.

### Summary of the Invention

An objective of the invention is to provide a method and device for secure access protocol conformance testing on an authentication service entity.

The present invention provides a method for secure access protocol conformance testing on an authentication service entity, and the method includes the following steps: checking whether a certificate issued by the authentication service entity to be tested complies with a corresponding specification of a standard; simulating an authentication requester to send a certificate authentication request message to the authentication service entity to be tested; capturing a certificate authentication response fed back from the authentication service entity to be tested; and obtaining a secure access protocol conformance testing result on the authentication service entity to be tested by analyzing the certificate authentication response.

Preferably, the step of sending a certificate authentication request message includes: sending a variety of certificate authentication request messages including a combination of validity statuses of the certificate.

Preferably, the certificate issued by the authentication service entity to be tested includes a terminal certificate and an access point certificate, and the combination of validity statuses of the certificate particularly is a combination of a variety of statues such as "valid" and "revoked", of the access point certificate and the terminal certificate.

Preferably, the certificate issued by the authentication service entity to be tested includes an access point certificate and a terminal certificate, and the authentication requester is an access point; and the certificate authentication request message contains the terminal certificate and the access point certificate issued by the authentication service entity to be tested, and the certificate authentication response includes an authentication result upon authentication of the access point certificate and the terminal certificate by the authentication service entity to be tested.

Preferably, the step of checking whether a certificate issued by the authentication service entity to be tested complies with a corresponding specification of a standard includes: checking whether a value of a version number field in the certificate issued by the authentication service entity to be tested complies with a corresponding specification of the standard; checking whether a length and content of a serial number field in the certificate issued by the authentication service entity to be tested complies with a corresponding specification of the standard; checking whether a hashing algorithm of a signature algorithm field and a value of a signature algorithm sub-field in the certificate issued by the authentication service entity to be tested complies with a corresponding specification of the standard; checking whether values of length sub-fields and lengths of content sub-fields of a certificate issuer name field, a certificate holder name field, a certificate holder public key field and a issuer signature field in the certificate issued by the authentication service entity to be tested are the same; and checking whether a length of a validity period field in the certificate issued by the authentication service entity to be tested complies with a corresponding specification of the standard.

Preferably, the certificate authentication response includes a terminal certificate authentication result and an access point certificate authentication result, and the step of analyzing the certificate authentication response includes: checking whether a version number of the certificate authentication response complies with a corresponding specification of the standard; checking whether a value of a data length field in the certificate authentication response complies with a length of a data field; determining by comparison whether content of a terminal certificate validity status field of an information field of the terminal certificate authentication result is the same as a validity status of a locally stored terminal certificate, and whether a value of a code field of the terminal certificate authentication result is within a range defined in the standard; determining by comparison whether content of an access point certificate validity status field of an information field of the access point certificate authentication result is the same as a validity status of a locally stored access point certificate, and whether a value of a code field of the access point certificate authentication result is within a range defined in the standard; and determining by comparison whether a value of a length sub-field and a length of a content sub-field of an authentication service entity signature field in the certificate authentication response are the same, and whether they are the same as a valid length value specified in the standard.

Preferably, the method further includes: storing locally the certificate issued by the authentication service entity to be tested and its validity status.

Preferably, the secure access protocol includes the WAPI (Wireless Local Area Network Authentication and Privacy Infrastructure) protocol.

The present invention further provides a method for secure access protocol conformance testing on an authentication service entity, and the method includes the following steps: storing a certificate with a particular validity status, which is issued by the authentication service entity to be tested, and checking whether the certificate complies with a corresponding specification of a standard; capturing an authentication result of the certificate, which is sent by the authentication service entity to be tested; performing a conformance analysis on the authentication result according to content of the stored certificate and a specification of the standard; and determining whether the secure access protocol conformance testing on the authentication service entity to be tested is passed based on a checking conclusion of the certificate and an analysis conclusion of the authentication result of the certificate.

Preferably, the step of determining whether the secure access protocol conformance testing on the authentication service entity to be tested is passed based on a checking conclusion of the certificate and an analysis conclusion of the authentication result of the certificate includes: if the stored certificate issued by the authentication service entity to be tested complies with a corresponding specification of the standard, and the authentication result of the certificate complies with the content of the stored certificate and a corresponding specification of the standard, then determining that the secure access protocol conformance testing on the authentication service entity to be tested is passed; otherwise, determining that the secure access protocol conformance testing on the authentication service entity to be tested is failed.

Preferably, the step of capturing the authentication result sent by the service entity includes: simulating an authentication requester to send to the authentication service entity to be tested a certificate authentication request message containing the stored certificate with the particular validity status; and receiving a certificate authentication response fed back from the authentication service entity to be tested, which includes at least an authentication result of the certificate contained in the authentication request message.

Preferably, the certificate issued by the authentication service entity to be tested includes a terminal certificate and an access point certificate, the authentication requester is an access point, and the authentication result of the certificate includes an authentication result of the access point certificate and an authentication result of the terminal certificate.

Preferably, conformance of the certificate authentication result and the content of the stored certificate includes: a validity status of the certificate in the certificate authentication result complies with a validity status of the stored certificate.

The present invention provides a device for secure access protocol conformance testing on an authentication service entity, and the device includes: a certificate storage unit adapted to locally store a certificate with a particular validity status issued by the authentication service entity to be tested; a certificate checking unit adapted to check whether the certificate stored in the storage unit complies with a corresponding specification of a standard; a certificate authentication result capture unit adapted to capture an authentication result of the certificate, which is sent by the authentication service entity to be tested; a certificate authentication result analysis unit adapted to check and analyze the authentication result of the certificate according to content of the locally stored certificate and a specification of the standard; and a testing result determination unit adapted to determine whether the secure access protocol conformance testing on the authentications service entity to be tested is passed based on a checking conclusion by the certificate checking unit and an analysis conclusion by the certificate authentication result analysis unit.

If the checking conclusion by the certificate checking unit is that the certificate issued by the authentication service entity to be tested complies with the corresponding specification of the standard, and the analysis conclusion by the certificate authentication result analysis unit is that the authentication result of the certificate complies with the contents of the locally stored certificate and the corresponding specification of the standard, then a testing result determined by the testing result determination unit is that the secure access protocol conformance testing on the authentications service entity to be tested is passed; otherwise the determined testing result is failed.

Preferably, the certificate authentication result capture unit includes: a certificate authentication request simulation sub-unit, adapted to simulate an authentication requester to send to the authentication service entity to be tested an authentication request message containing the locally stored certificate with the particular validity status; and a certificate authentication result reception sub-unit adapted to receive a certificate authentication response fed back from the authentication service entity to be tested, which includes at least an authentication result of the certificate contained in the authentication request message.

Preferably, the certificate authentication result analysis unit includes: a first analysis sub-unit adapted to determine by comparison whether the authentication result of the certificate complies with the content of the locally stored certificate, which at least including determining by comparison whether a certificate validity status in the certificate authentication result complies with the a validity status of the stored certificate; and a second analysis sub-unit, adapted to determine by comparison whether the certificate authentication result complies with a corresponding specification of the standard.

Preferably, the certificate issued by the authentication service entity to be tested include a terminal certificate and an access point certificate, the authentication requester is an access point, and the certificate authentication result include an authentication result of the access point certificate and an authentication result of the terminal certificate.

The present invention is designed based upon authentication service entities and can be used to test the correctness and conformance of the realization of a secure access protocol for an authentication service entity made by a device manufacturer. On one hand, the certificate with a particular validity status issued by the authentication service entity to be tested is checked to see whether it complies with a corresponding specification of a standard, on the other hand, the captured authentication result of the certificate sent by the authentication service entity to be tested is analyzed, thereby determining whether the secure access protocol conformance testing on the authentication service entity to be tested is passed. It can be seen, the conformance conclusion in the solution of the present invention is drawn from a direct analysis of a certificate and a authentication result of the certificate, instead of other reasoning, therefore the correctness and conformance of the realization of a secure access protocol on the authentication service entity can be ensured.

Furthermore, since the solution of the present invention performs an item-by-item analysis of a certificate itself issued by an authentication service entity to be tested and an fed back authentication result of the certificate, detailed error locating information can be provided in case the test is failed.

### Brief Description of the Drawings

Figure 1 illustrates a topological diagram of an embodiment of a system for secure access protocol conformance testing on an authentication service entity according to the present invention;

Figure 2 illustrates a flow chart of an embodiment of a method for secure access protocol conformance testing on an authentication service entity according to the present invention; and

Figure 3 illustrates a structural diagram of an embodiment of a device for secure access protocol conformance testing on an authentication service entity according to the present invention.

### Detailed Description of the Invention

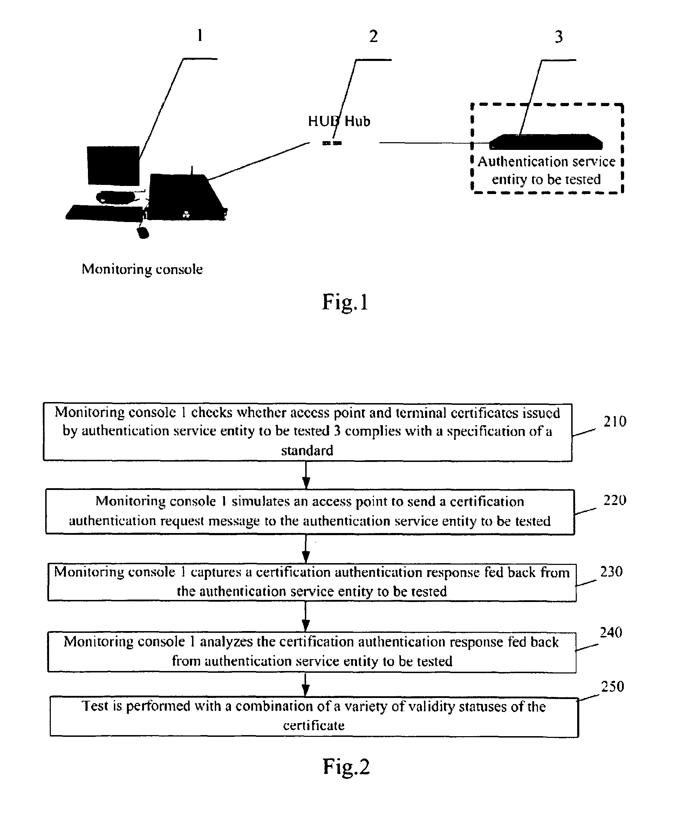

The methods according to the present invention are applicable to WAPI protocol (Wireless Local Area Network Authentication and Privacy Infrastructure). The solutions according to the present invention are applicable to a system structure as illustrated in Fig.1, which includes a monitoring console 1, a hub 2 and an authentication service entity to be tested 3, where the monitoring console 1 and the authentication service entity to be tested 3 intercommunicate via the hub 2.

A specific implementation of the present invention will be given, taking the system of Fig.1 as an example, and a detail flow chart of the method is illustrated in Fig.2.

Step 210: The monitoring console 1 checks whether access point and terminal certificates issued by the authentication service entity to be tested 3 comply with a specification of a standard. Particularly, the access point certificate and the terminal certificate issued by the authentication service entity to be tested 3 are installed in the monitoring console 1, further, the monitoring console 1 checks and analyzes the access point certificate and the terminal certificate issued by the authentication service entity to be tested 3 according to a format specified in the standard. It shall be noted that the monitoring console 1 stores validity statuses of the access point certificate and the terminal certificate issued by the authentication service entity to be tested 3 while installing the certificates, and a validity status of a certificate refers to the legality of the certificate (e.g., the certificate is valid) or illegality of the certificate (e.g., the certificate has been revoked).

The step 210 particularly includes sub-steps 310 to 350:

Sub-step 310: The monitoring console 1 checks whether values of version number fields in the certificates issued by the authentication service entity to be tested 3 comply with values specified in the standard. Particularly, it needs to check whether a value of a version number field in the terminal certificate issued by the authentication service entity to be tested 3 complies with a value specified in the standard and whether a value of a version number field in the access point certificate issued by the authentication service entity to be tested 3 complies with a corresponding specification in the standard.

Sub-step 320: The monitoring console 1 checks whether lengths and contents of respective serial number fields in the access point certificate and the terminal certificate issued by the authentication service entity to be tested 3 comply with corresponding specifications in the standard.

Sub-step 330: The monitoring console 1 checks whether hashing algorithms and values of signature algorithm sub-fields of respective signature algorithm fields in the access point certificate and the terminal certificate issued by the authentication service entity to be tested 3 comply with corresponding specifications in the standard.

Sub-step 340: The monitoring console 1 checks whether values of length sub-fields and lengths of content sub-fields in respective certificate issuer name fields, certificate holder name fields, certificate holder public key fields and issuer signature fields in the access point certificate and the terminal certificate issued by the authentication service entity to be tested 3 comply with corresponding specifications in the standard.

Sub-step 350: The monitoring console 1 checks whether lengths of respective validity period fields in the access point certificate and the terminal certificate issued by the authentication service entity to be tested 3 comply with corresponding specifications in the standard.

Step 220: The monitoring console 1 simulates an access point to send a certificate authentication request message to the authentication service entity to be tested. Particularly, the monitoring console 1 simulates the access point to create the certificate authentication request message particularly including the terminal certificate and the access point certificate to be authenticated.

The step 230: The monitoring console 1 captures a certificate authentication response fed back from the authentication service entity to be tested 3. Upon reception of the certificate authentication request message sent by the monitoring console 1, the authentication service entity to be tested 3 feeds back the certificate authentication response to the monitor console 1 including an authentication result of the terminal certificate and an authentication result of the access point certificate. The authentication result of the terminal certificate particularly refers to a validity status of the terminal certificate to be authenticated in the certificate authentication request message, and the authentication result of the access point certificate particularly refers to a validity status of the access point certificate to be authenticated in the certificate authentication request message. The validity status of a certificate refers to the legality of the certificate (e.g., the certificate is valid) or illegality of the certificate (e.g., the certificate has been revoked).

Step 240: The monitoring console 1 analyzes the certificate authentication response fed back from the authentication service entity to be tested. The step 240 particularly includes sub-steps 410 to 450:

Sub-step 410: The monitoring console 1 checks whether a version number of the certificate authentication response fed back from the authentication service entity to be tested complies with a corresponding specification in the standard.

Sub-step 420: The monitoring console 1 checks whether a value of a data length field of the certificate authentication response fed back from the authentication service entity to be tested complies with a corresponding specification in the standard.

Sub-step 430: The monitoring console 1 determines by comparison whether content of a terminal certificate field in an information field of the authentication result of the terminal certificate (i.e., the validity status of the terminal certificate) are the same as the validity status of a locally stored terminal certificate and whether a value of a code field of the authentication result of the terminal certificate is within a range specified in the standard.

As an example, it is assumed that in the step 210, the validity status of a terminal certificate issued by the authentication service entity to be tested 3 and installed at the monitoring console 1 is "revoked", and this terminal certificate with the validity status of "revoked will be referred to as first terminal certificate below for convenience, that is, the status of the first terminal certificate, which is stored locally at the monitoring console 1, is "revoked". Further in the step 220, the certificate authentication request message sent by the monitoring console 1 to the authentication service entity to be tested 3 includes the first terminal certificate. Thereafter in the sub-step 430, if the monitoring console 1 parses the information field of the authentication result of the terminal certificate and determines the validity status of the first terminal certificate to be "valid", then it is different from the validity status "revoked" of the first terminal certificate locally stored (i.e., at the monitoring console 1); on the contrary, if the validity status of the first terminal certificate parsed from the information field of the authentication result of the terminal certificate is "revoked", then it is the same as the validity status "revoked" of the locally stored first terminal certificate.

Sub-step 440: The monitoring console 1 determines by comparison whether content of an access point certificate authentication result field in an information field of the authentication result of the access point certificate (i.e., the validity status of the access point certificate) are the same as a validity status of a locally stored access point certificate and whether a value of a code field of the authentication result of the access point certificate is within a range specified in the standard. An implementation of analyzing the authentication result of the access point certificate in sub-step 440 is similar to that of analyzing the authentication result of the terminal certificate in the sub-step 430 therefore repeated description thereof is omitted.

Sub-step 450: The monitoring console 1 determines by comparison whether a value of a length sub-field and a length of a content sub-field in an authentication service entity signature field in the certificate authentication response fed back from the authentication service entity to be tested 3 are the same and whether they comply with a valid length value specified in the standard.

Step 250: A testing with a combination of a variety of validity statuses of the certificates can further be performed to make the testing more comprehensive. Particularly, in the certificate authentication request message sent by the monitoring console 1 while it is simulating an access point to the authentication service entity to be tested 3, different validity statuses of the access point certificate and the terminal certificate can be combined in correspondence with a combination of a variety of statuses such as "valid" and "revoked" of the access point and terminal certificates. For example, the access point certificate with the status of "valid" and the terminal certificate with the status of "revoked" result in a combination, the access point certificate with the status of "revoked" and the terminal certificate with the status of "valid" result in another combination, and of course, the access point certificate with the status of "valid" and the terminal certificate with the status of "valid" result in still another combination. The correctness of the authentication service entity to be tested 3 can be tested more comprehensively by sending the certificate authentication request message with a combination of a variety of validity statuses of the certificates. It is noted that the statues of the certificates include but are not limited to the two statuses of "valid" and "revoked", other certificate statuses can be set as required in practice.

Check whether the authentication result of the access point certificate and the authentication result of the terminal certificate in the certificate authentication response message returned by the authentication service entity to be tested 3 each time complies with the statuses of the sent certificates. Particularly, if the status of the access point certificate sent in the authentication request message is "valid" and the status of the terminal certificate is "revoked", while the status of the access point certificate in the certificate authentication result fed back from the authentication service entity to be tested 3 is "valid" and the status of the terminal certificate is "revoked", then it can be determined that the sent certificate statuses comply with the certificate statues resulting from authentication by the authentication service entity to be tested 3; otherwise the two do not comply with each other. In the analysis and check processes described in the above respective steps, the testing result of the authentication service entity to be tested 3 is a failure if any of the checks is failed, that is, the authentication service entity to be tested passes the protocol conformance testing only if all the above checks are passed. It can be seen from the above procedure, on one hand, the monitoring console 1 compares the certificates issued by the authentication service entity to be tested 3 with the standard, on the other hand, the monitoring console 1 analyzes the authentication result of the certificates, which are fed back from the authentication service entity to be tested 3 according to the content of the above-mentioned locally stored certificate and corresponding specifications in the standard and determines whether the secure access protocol conformance testing on the authentication service entity to be tested 3 is passed based on an analysis conclusion. If the authentication result of the certificates comply with both of the content of the locally stored certificates and corresponding specifications in the standard, then it is determined that the secure access protocol conformance testing on the authentication service entity to be tested is passed; otherwise it is determined that the testing is failed. Since the solutions in the embodiments of the present invention performs an item-by-item analysis on the certificates itself issued by the authentication service entity to be tested 3 and the authentication result of the certificates fed back, detailed error locating information can be provided in case the testing is failed.

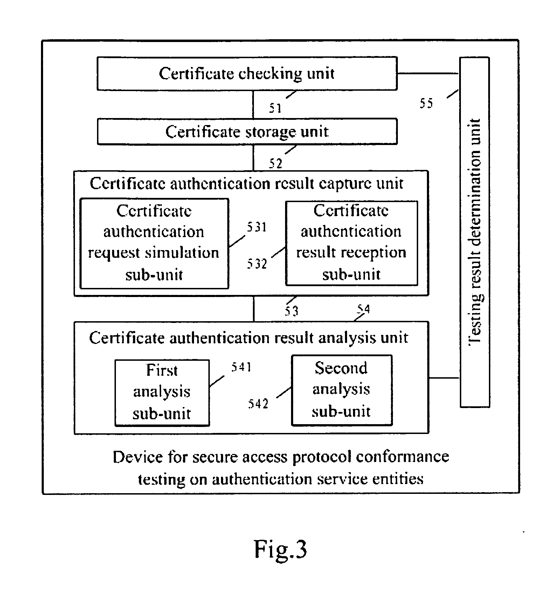

Now refer to Fig.3, which illustrates a structural diagram of an embodiment of a device for secure access protocol conformance testing on an authentication service entity according to the invention. The device in this embodiment can be placed in the monitoring console 1. The device includes a certificate storage unit 52, a certificate checking unit 51, a certificate authentication result capture unit 53, a certificate authentication result analysis unit 54 and a testing result determination unit 55.

Particularly, the device locally stores certificates with particular validity statuses issued by the authentication service entity to be tested by the certificate storage unit 52, and the certificates issued by the authentication service entity to be tested include an access point certificate and a terminal certificate. Then, the certificate checking unit 51 checks whether the certificates stored in the storage unit 52 comply with a corresponding specification in a standard, and the testing result determination unit 55 is notified with a check conclusion.

Furthermore, the certificate authentication result capture unit 53 captures authentication results of the certificates, which are sent by the authentication service entity to be tested. The certificate authentication result capture unit 53 particularly includes a certificate authentication request simulation sub-unit 531 and a certificate authentication result reception sub-unit 532, where the certificate authentication request simulation sub-unit 531 simulates an authentication requester (e.g., an access point) to send to the authentication service entity to be tested an authentication request message including the locally stored certificates with the particular validity statuses. The authentication service entity to be tested authenticates the respective certificates in the authentication request message upon reception of the message, and furthermore the certificate authentication result reception sub-unit 532 receives a certificate authentication response fed back from the authentication service entity to be tested, and the certificate authentication response includes at least the authentication results of the certificates included in the authentication request message.

Thereupon, the certificate authentication result analysis unit 54 checks and analyzes the authentication results of the certificates captured by the authentication result capture unit 53 according to the locally stored certificate contents and specifications in the standard and notifies the testing result determination unit 55 with an analysis result. Particularlly, the certificate authentication result analysis unit 54 includes a first analysis sub-unit 541 and a second analysis sub-unit 542, where the first analysis sub-unit 541 is adapted to determine by comparison whether the authentication results of the certificates comply with the locally stored certificate contents, including at least whether validity statuses of the certificates in the certificate authentication results comply with the stored validity statuses of the certificates, and the second analysis sub-unit 542 is adapted to determine by comparison whether the authentication results of the certificates comply with the corresponding specifications in the standard.

Finally, the testing result determination unit 55 determines whether the secure access protocol conformance testing on the authentications service entity to be tested is passed based on the checking conclusion of the certificate check unit 51 and the analysis conclusion of the certificate authentication result analysis unit 54. Particularly, if the checking conclusion of the certificate check unit is that the certificates issued by the authentication service entity to be tested comply with the corresponding specifications in the standard, and the analysis conclusion of the certificate authentication result analysis unit is that the authentication results of the certificates comply with the locally stored certificate contents and the corresponding specifications in the standard, then a testing result determined by the testing result determination unit is that the secure access protocol conformance testing on the authentication service entity to be tested is passed; otherwise the testing result is determined to be failed.

The device of Fig.3 can be placed in the monitoring console 1 illustrated in Fig.1, and when the system is in operation, the authentication service entity to be tested 3 issues respectively two access point certificates and two terminal certificates and then revokes respectively one access point certificate and one terminal certificate which have been issued, and the monitoring console 1 installs the "valid" and "revoked" access point and terminals certificates issued by the authentication service entity to be tested. A monitoring simulation program of the monitoring console 1 is run to send a certificate authentication request message with a combination of a variety of the validity of access point and terminal certificates to the authentication service entity to be tested 3 respectively. The monitoring console 1 analyzes an encapsulation format and certificate authentication results of a certificate authentication response message returned by the authentication service entity to be tested 3.

## Claims

1. A method for secure access protocol conformance testing on an authentication service entity, comprising:
checking whether a certificate issued by the authentication service entity to be tested complies with a corresponding specification of a standard;
simulating an authentication requester to send a certificate authentication request message to the authentication service entity to be tested;
capturing a certificate authentication response fed back from the authentication service entity to be tested; and
obtaining a secure access protocol conformance testing result on the authentication service entity to be tested by analyzing the certificate authentication response.

2. The method for secure access protocol conformance testing on an authentication service entity according to claim 1, wherein the step of sending the certificate authentication request message comprises: sending a verity of certificate authentication request messages with a combination of validity statuses of the certificate.

3. The method for secure access protocol conformance testing on an authentication service entity according to claim 2, wherein the certificate issued by the authentication service entity to be tested comprises a terminal certificate and an access point certificate, and the combination of validity statuses of the certificate is a combination of a variety of statues, which at least comprises "valid" and "revoked", of the access point certificate and the terminal certificate.

4. The method for secure access protocol conformance testing on an authentication service entity according to claim 1, wherein the certificate issued by the authentication service entity to be tested comprises an access point certificate and a terminal certificate, the authentication requester is an access point;
the certificate authentication request message contains the access point certificate and the terminal certificate issued by the authentication service entity to be tested, and the certificate authentication response comprises an authentication result upon authentication of the access point certificate and the terminal certificate by the authentication service entity to be tested.

5. The method for secure access protocol conformance testing on an authentication service entity according to any one of claims 1 to 4, wherein the step of checking whether a certificate issued by the authentication service entity to be tested complies with a corresponding specification in a standard comprises:
checking whether a value of a version number field in the certificate issued by the authentication service entity to be tested complies with a corresponding specification of the standard;
checking whether a length and content of a serial number field in the certificate issued by the authentication service entity to be tested complies with a corresponding specification of the standard;
checking whether a hashing algorithm of a signature algorithm field and a value of a signature algorithm sub-field in the certificate issued by the authentication service entity to be tested complies with a corresponding specification of the standard;
checking whether values of length sub-fields and lengths of content sub-fields of a certificate issuer name field, a certificate holder name field, a certificate holder public key field and a issuer signature field in the certificate issued by the authentication service entity to be tested are the same; and
checking whether a length of a certificate validity period field in the certificate issued by the authentication service entity to be tested complies with a corresponding specification of the standard.

6. The method for secure access protocol conformance testing on an authentication service entity according to any one of claims 1 to 4, wherein the certificate authentication response comprises a terminal certificate authentication result and an access point certificate authentication result, the step of analyzing the certificate authentication response comprises:
checking whether a version number of the certificate authentication response complies with a corresponding specification of the standard;
checking whether a value of a data length field in the certificate authentication response complies with a length of a data field;
determining by comparison whether content of a terminal certificate validity status field of an information field of the terminal certificate authentication result is the same as a validity status of a locally stored terminal certificate, and whether a value of a code field of the terminal certificate authentication result is within a range defined in the standard;
determining by comparison whether content of an access point certificate validity status field of an information field of the access point certificate authentication result is the same as a validity status of a locally stored access point certificate, and whether a value of a code field of the access point certificate authentication result is within a range defined in the standard; and
determining by comparison whether a value of a length sub-field and a length of a content sub-field of an authentication service entity signature field in the certificate authentication response are the same, and whether they are the same as a valid length value specified in the standard.

7. The method for secure access protocol conformance testing on an authentication service entity according to any one of claims 1 to 4, further comprising:
storing locally the certificate issued by the authentication service entity to be tested and its validity status.

8. The method for secure access protocol conformance testing on an authentication service entity according to any one of claims 1 to 4, wherein the secure access protocol is Wireless Local Area Network Authentication and Privacy Infrastructure (WAPI) protocol.

9. A method for secure access protocol conformance testing on an authentication service entity, comprising:
storing a certificate with a particular validity status issued by the authentication service entity to be tested, and checking whether the certificate complies with a corresponding specification of a standard;
capturing an authentication result of the certificate, which is sent by the authentication service entity to be tested;
performing a conformance analysis on the authentication result according to content of the stored certificate and a specification of the standard; and
determining whether the secure access protocol conformance testing on the authentication service entity to be tested is passed based on a checking conclusion of the certificate and an analysis conclusion of the certificate authentication result.

10. The method according to claim 9, wherein the step of determining whether the secure access protocol conformance testing on the authentication service entity to be tested is passed based on a checking conclusion of the certificate and an analysis conclusion of the certificate authentication result comprises:
if the stored certificate issued by the authentication service entity to be tested complies with a corresponding specification of the standard, and the certificate authentication result complies with the content of the stored certificate and a corresponding specification of the standard, then determining that the secure access protocol conformance testing on the authentication service entity to be tested is passed; otherwise, determining that the secure access protocol conformance testing on the authentication service entity to be tested is failed.

11. The method according to claim 9, wherein the step of capturing the authentication result sent by the service entity comprises:
simulating an authentication requester to send to the authentication service entity to be tested a certificate authentication request message containing the stored certificates with the particular validity status; and
receiving a certificate authentication response fed back from the authentication service entity to be tested, which comprises at least an authentication result of the certificate contained in the authentication request message.

12. The method according to claim 9 or 10, wherein the certificate issued by the authentication service entity to be tested comprises an access point certificate and a terminal certificate, the authentication requester is an access point, and the certificate authentication result comprises an authentication result of the access point certificate and an authentication result of the terminal certificate.

13. The method according to claim 10, wherein conformance of the certificate authentication result and the content of the stored certificate comprises: a validity status of the certificate in the certificate authentication result complies with a validity status of the stored certificate.

14. A device for secure access protocol conformance testing on an authentication service entity, comprising:
a certificate storage unit, adapted to locally store a certificate with a particular validity status issued by the authentication service entity to be tested;
a certificate checking unit, adapted to check whether the certificate stored in the storage unit complies with a corresponding specification of a standard;
a certificate authentication result capture unit, adapted to capture an authentication result of the certificate, which is sent by the authentication service entity to be tested;
a certificate authentication result analysis unit, adapted to check and analyze the certificate authentication result according to content of the locally stored certificate and a specification of the standard; and
a testing result determination unit, adapted to determine whether the secure access protocol conformance testing on the authentications service entity to be tested is passed based on a checking conclusion by the certificate checking unit and an analysis conclusion by the certificate authentication result analysis unit.

15. The device according to claim 14, wherein:
If the checking conclusion by the certificate checking unit is that the certificates issued by the authentication service entity to be tested complies with the corresponding specification of the standard, and the analysis conclusion by the certificate authentication result analysis unit is that the authentication result of the certificates complies with the contents of the locally stored certificate and the corresponding specification of the standard, then a testing result determined by the testing result determination unit is that the secure access protocol conformance testing on the authentications service entity to be tested is passed; otherwise the determined testing result is failed.

16. The device according to claim 14 or 15, wherein the certificate authentication result capture unit comprising:
a certificate authentication request simulation sub-unit, adapted to simulate an authentication requester to send to the authentication service entity to be tested an authentication request message containing the locally stored certificate with the particular validity status; and
a certificate authentication result reception sub-unit, adapted to receive a certificate authentication response fed back from the authentication service entity to be tested, which comprises at least an authentication result of the certificate contained in the authentication request message.

17. The device according to claim 14 or 15, wherein the certificate authentication result analysis unit comprises:
a first analysis sub-unit, adapted to determine by comparison whether the certificate authentication result complies with the content of the locally stored certificate, which at least comprises determining by comparison whether a certificate validity status in the certificate authentication result complies with the a validity status of the stored certificate; and
a second analysis sub-unit, adapted to determine by comparison whether the certificate authentication result complies with a corresponding specification of the standard.

18. The device according to claim 14 or 15, wherein the certificate issued by the authentication service entity to be tested comprises an access point certificate and a terminal certificate, the authentication requester is an access point, and the certificate authentication result comprises an authentication result of the access point certificate and an authentication result of the terminal certificate.
